# EUROPEAN PATENT APPLICATION

(11) **EP 2 752 573 A1**
(43) Date of publication of application: **09.07.2014**
(21) Application number: 12828237.3
(22) Date of filing: 24.04.2012
(51) Int. Cl.: F02G 5/00, F01N 5/02, F02B 37/00, F02G 5/02, F02G 5/04, F22B 1/18

(54) **WASTE HEAT UTILIZATION DEVICE**

(30) Priority: 31.08.2011 JP 2011188521
(71) Applicant: Kabushiki Kaisha Toyota Jidoshokki, Kariya-shi, Aichi 448-8671 (JP)
(72) Inventor: MORI, Hidefumi, Kariya-shi Aichi 448-8671 (JP); IGUCHI, Masao, Kariya-shi Aichi 448-8671 (JP); ENOKIJIMA, Fuminobu, Kariya-shi Aichi 448-8671 (JP); ISHIGURO, Fumihiko, Kariya-shi Aichi 448-8671 (JP); TAKEI, Hiroyuki, Kariya-shi Aichi 448-8671 (JP)
(74) Representative: TBK
(86) International application number: PCT/JP2012/060907
(87) International publication number: WO 2013/031287

(57) **Abstract**

To provide a waste heat utilization apparatus that provides high performance, is able to be easily mounted in a vehicle and the like, and able to be manufactured at low cost.

A waste heat utilization apparatus of a first embodiment includes a driving system 1 including an engine 5 and a turbocharger 7 supplying pressurized air to the engine 5, and a Rankine cycle system 3a used for the driving system. The Rankine cycle system 3a includes a coolant boiler 21 causing heat exchange between coolant as heating medium and working fluid, and a pressurized air boiler 23 causing heat exchange between the pressurized air as heating medium and the working fluid. A first bypass channel 34 for allowing the working fluid to bypass the coolant boiler 21 and a three-way valve 35 are provided in the Rankine cycle system 3a. In the waste heat utilization apparatus, the amount of heat absorbed in the working fluid in the coolant boiler 21 can be reduced by flowing the working fluid into the first bypass channel 34.

## Description

### TECHNICAL FIELD

The present invention relates to a waste heat utilization apparatus.

### BACKGROUND ART

A waste heat utilization apparatus of the background art is disclosed in Patent literature 1. The waste heat utilization apparatus is used for a driving system and comprises a Rankine cycle system which comprises first and second boilers and circulates working fluid. The driving system includes an engine and a turbocharger which supplies pressurized air to the engine. The first boiler in the Rankine cycle system causes heat exchange between coolant for the engine as heating medium and the working fluid to heat the working fluid. The second boiler causes heat exchange between the pressurized air as heating medium and the working fluid to heat the working fluid.

Since this type of waste heat utilization apparatus is capable of heating the working fluid using the first and second boilers, high pressure energy can be produced during expansion and decompression of the working fluid. Accordingly, a large amount of energy can be recovered in the Rankine cycle system, allowing the waste heat utilization apparatus to achieve high performance.

In particular, FIG. 1 of Patent literature 1 discloses that the first boiler is disposed upstream and the second boiler is disposed downstream in the direction in which the working fluid circulates in the Rankine cycle system. Since the pressurized air is hotter than the coolant in this case, the working fluid heated in the first boiler can be further heated in the second boiler. This enables the waste heat utilization apparatus to recover a larger amount of energy.

### CITATION LIST

### PATENT LITERATURE

Patent literature 1: Japanese Patent Application Laid-Open No. 2008-8224

### SUMMARY OF THE INVENTION

### PROBLEMS TO BE SOLVED BY THE INVENTION

In a driving system that includes a supercharger such as a turbocharger, it is preferable to sufficiently cool the pressurized air before being supplied to an internal-combustion engine. This is because cooling the pressurized air increases the density of the pressurized air and accordingly a larger amount of the pressurized air can be supplied to the engine, thereby improving the output power of the internal-combustion engine.

However, while the waste heat utilization apparatus disclosed in FIG. 1 of Patent literature 1 can sufficiently heat the working fluid because heat exchange arises in the second boiler between the working fluid already heated in the first boiler and the pressurized air, it is difficult for the waste heat utilization apparatus to sufficiently cool the pressurized air. Accordingly, in the waste heat utilization apparatus, the second boiler is not able to sufficiently cool the pressurized air and therefore it is difficult to adequately supply the pressurized air to the internal-combustion engine, making it difficult to increase the output power of the internal-combustion engine.

If an extra intercooler for cooling the pressurized air is provided as illustrated in FIG. 1 of Patent literature 1 in order to make up for the insufficient cooling ability in the second boiler, the size and structural complexity of the waste heat utilization apparatus will increase. This impairs the mountability in a vehicle and the like and increases the manufacturing cost.

The present invention has been made in light of these circumstances and a problem to be solved by the present invention is to provide a waste heat utilization apparatus that provides high performance, is able to be easily mounted in a vehicle and the like, and able to be manufactured at low cost.

### MEANS FOR SOLVING THE PROBLEM

The present invention is a waste heat utilization apparatus that is used for a driving system including an internal-combustion engine and a supercharger supplying pressurized air to the internal-combustion engine,
the waste heat utilization apparatus comprising a Rankine cycle system which circulates working fluid,
wherein the Rankine cycle system comprises a pump, a boiler, an expansion machine, a condenser, and pipes circulating the working fluid through the pump, the boiler, the expansion machine and the condenser in this order;
the boiler includes a first boiler causing heat exchange between the pressurized air as heating medium and the working fluid and a second boiler causing heat exchange between other heating medium different from the pressurized air and the working fluid; and
the waste heat utilization apparatus comprises:
judgment means for judging a required amount of cooling of the pressurized air; and
heat absorption amount adjusting means for decreasing an amount of heat absorbed in the working fluid in the second boiler when the required amount of cooling judged by the judgment means is greater than threshold value (Claim 1).

The waste heat utilization apparatus of the present invention comprises a Rankine cycle system used for a driving system. The driving system includes an internal-combustion engine and a supercharger which supplies the pressurized air to the internal-combustion engine. The Rankine cycle system comprises a pump, a boiler, an expansion machine, a condenser, and pipes. The pipes circulate working fluid through the pump, the boiler, the expansion machine and the condenser, in this order. The boiler includes first and second boilers. In the first boiler, heat exchange arises between the pressurized air as heating medium and the working fluid. In the second boiler, heat exchange arises between the working fluid and other heating medium that is different from the pressurized air.

Accordingly, the working fluid can be heated in the first and second boilers in the waste heat utilization apparatus, which increases the pressure energy of the working fluid and consequently increases the amount of energy recoverable in the Rankine cycle system. Note that examples of the recoverable energy include electric power generated from the pressurized energy and motive power recirculated to the internal-combustion engine.

In the waste heat utilization apparatus, the pressurized air can be cooled by heat exchange in the first boiler. Here, the waste heat utilization apparatus comprises judgment means for judging a required amount of cooling of the pressurized air and heat absorption amount adjusting means. When the required amount of cooling judged by the judgment means is greater than threshold value in the waste heat utilization apparatus, the amount of heat absorbed in the working fluid in the second boiler can be decreased. In this case, since the temperature of the working fluid flowing out from the second boiler is lowered, heat can be adequately dissipated from the pressurized air to the working fluid. This enables adequate cooling of the pressurized air in the first boiler in the waste heat utilization apparatus even though the waste heat utilization apparatus includes the second boiler in addition to the first boiler. Thus the waste heat utilization apparatus is capable of supplying the pressurized air with density increased by cooling to the internal-combustion engine, thereby increasing the output power of the internal-combustion engine.

In this way, the first boiler in the waste heat utilization apparatus serves as an intercooler for the pressurized air and the existence of the second boiler does not impair the ability to cool the pressurized air in the first boiler. Therefore, a dedicated intercooler does not need to be additionally provided in the waste heat utilization apparatus, which enables size reduction and structural simplification of the waste heat utilization apparatus.

Accordingly, the waste heat utilization apparatus of the present invention provides high performance, is able to be easily mounted in a vehicle and the like, and able to be manufactured at low cost.

The internal-combustion engine included in the driving system used with the waste heat utilization apparatus of the present invention may be any of a various types of engines, including a gasoline engine and diesel engine. The engines may be hybrid engines which are combinations of motors. Furthermore, the engines may be air-cooled or water-cooled engines. The supercharger may be a turbocharger or a mechanical supercharger, for example. There may be a plurality of internal-combustion engines and superchargers.

The heating medium capable of heat-exchange with the working fluid in the second boiler may be colder than the pressurized air or may have temperature equal to or higher than the pressurized air. Heating medium colder than the pressurized air may be coolant for the internal-combustion engine or lubricant oil for the internal-combustion engine. The coolant may be water or LLC (long life coolant), for example. Heating medium that has temperature equal to or higher than the pressurized air may be exhaust gas from the internal-combustion engine, for example. The exhaust gas may include reflux exhaust gas returning to the internal-combustion engine as well as exhaust gas exiting to the atmosphere (exhaust gas in the narrow sense).

Furthermore, any number of second boilers may be provided in the waste heat utilization apparatus of the present invention. If a plurality of second boilers are provided, the same heating medium or different heating medium may be used in the second boilers.

The heat absorption amount adjusting means may be a bypass of the second boiler (a bypass of the working fluid or a bypass of the heating medium in the second boiler) or other means.

The judgment means in the waste heat utilization apparatus of the present invention can judge a required amount of cooling of the pressurized air using any of various kinds of means. For example, the waste heat utilization apparatus of the present invention may comprise output power requirement detecting means capable of detecting an output power requirement of the internal-combustion engine. The judgment means preferably judges the required amount of cooling of the pressurized air on the basis of value detected by the output power requirement detecting means (Claim 2).

The waste heat utilization apparatus of the present invention may comprise first temperature detecting means capable of detecting temperature of the pressurized air flowing out from the first boiler. The judgment means preferably judges the required amount of cooling of the pressurized air on the basis of value detected by the first temperature detecting means (Claim 3).

The waste heat utilization apparatus of the present invention may comprise second temperature detecting means capable of detecting temperature of the working fluid flowing into the first boiler. The judgment means preferably judges the required amount of cooling of the pressurized air on the basis of value detected by the second temperature detecting means (Claim 4).

The waste heat utilization apparatus of the present invention may comprise third temperature detecting means capable of detecting temperature of the working fluid flowing into the pump. The judgment means preferably judges the required amount of cooling of the pressurized air on the basis of value detected by the third temperature detecting means (Clam 5).

The waste heat utilization apparatus of the present invention may comprise fourth temperature detecting means capable of detecting temperature of the pressurized air flowing into the first boiler. The judgment means preferably judges the required amount of cooling of the pressurized air on the basis of value detected by the fourth temperature detecting means (Claim 6).

The waste heat utilization apparatus of the present invention may comprise pressure detecting means capable of detecting pressure of the working fluid from downstream of the expansion machine to upstream of the pump. The judgment means preferably judges the required amount of cooling of the pressurized air on the basis of value detected by the pressure detecting means (Claim 7).

Based on the temperature of the pressurized air flowing out or flowing into the boiler, the temperature of the working fluid flowing into the boiler or the pump, and the pressure (condensation pressure) of the working fluid from downstream of the expansion machine to upstream of the pump in addition to the output power requirement of the internal-combustion engine, the judgment means can accurately judge the required amount of cooling of the pressurized air. This enables the waste heat utilization apparatus to recover sufficient energy in the Rankine cycle system while at the same time improves the performance of the internal-combustion engine in a preferable manner, thereby achieving high performance.

In the waste heat utilization apparatus of the present invention, the second boiler may be disposed upstream of the first boiler in the Rankine cycle system. The pipes may allow the working fluid to circulate through the pump, the second boiler, the first boiler, the expansion machine and the condenser in this order (Claim 8).

In this case, the working fluid is heated in the second boiler and the first boiler in this order in the Rankine cycle system. Therefore, the configuration is especially effective when the heating medium with which the working fluid exchange heat in the second boiler is colder than the pressurized air.

Specifically, from the point of view of energy recovery in the Rankine cycle system, the pressure energy in the expansion machine increases and the amount of recoverable energy increases because the working fluid heated stepwise in the second boiler and the first boiler in this order flows into the expansion machine. On the other hand, heat exchange arises first in the second boiler prior to the heat exchange in the first boiler in the Rankine cycle system. Accordingly, heat exchange arises between the working fluid already heated to some extent by the heat exchange in the second boiler and the pressurized air in the first boiler. Here, even though heat exchange first arises in the second boiler, heat exchange can be adequately performed subsequently in the first boiler, enabling the pressurized air to be cooled adequately as long as the pressurized air is hotter than the heating medium in the second boiler as described above. Therefore the configuration where the second boiler and the first boiler are arranged in this order is not disadvantageous in terms of improvement of the performance of the internal-combustion engine.

Furthermore, in the waste heat utilization apparatus having the configuration described above, the heat absorption amount adjusting means preferably includes a first bypass channel branching off from one of the pipes downstream of the pump, bypassing the second boiler, and coupling to one of the pipes upstream of the first boiler, a first flow regulating valve capable of adjusting flow rate of the working fluid flowing into the second boiler and flow rate of the working fluid flowing into the first bypass channel, and first regulating valve control means for controlling the first flow regulating valve (Claim 9).

In this configuration, the temperature of working fluid flowing into the first boiler can be increased by flowing the working fluid into the second boiler to heat. On the other hand, when the required amount of cooling of pressurized air exceeds the threshold, the working fluid can be flown into the first bypass channel to bypass the heating of the working fluid in the second boiler and, as a result, the temperature of the working fluid flown into the first boiler can be lowered. This enables adequate heat dissipation from the pressurized air to the working fluid in the first boiler to lower the temperature of the pressurized air. Thus, the required amount of cooling of the pressurized air can be satisfied. In doing so, the first regulating valve control means can be used to control the first flow regulating valve to adjust the flow rate of working fluid flowing into the second boiler and the flow rate of the working fluid flowing into the first bypass channel and adequately adjust the temperature of the working fluid flowing into the first boiler according to the required amount of cooling of the pressurized air. These adjustments enable the improvement of the amount of energy recovered by the Rankine cycle system in the waste heat utilization apparatus and improvement of the performance of the internal-combustion engine as appropriate.

In the waste heat utilization apparatus of the present invention, the first boiler may be disposed upstream of the second boiler in the Rankine cycle system. The pipes may circulate the working fluid through the pump, the first boiler, the second boiler, the expansion machine and the condenser in this order (Claim 10).

In this configuration, the working fluid is heated in the first boiler and then in the second boiler in the Rankine cycle system. Therefore the configuration is effective especially when the temperature of the heating medium with which the working fluid exchange heat in the second boiler is equal to or higher than the temperature of the pressurized air.

That is, since working fluid sufficiently heated in the first boiler and the second boiler flows into the expansion machine in the waste heat utilization apparatus, the pressure energy in the expansion machine increases and therefore a larger amount of energy can be recovered in the Rankine cycle system. Furthermore, since the first boiler is located upstream of the second boiler in the direction in which the working fluid circulates, low-temperature working fluid flows into the first boiler. Accordingly, heat can be dissipated from the pressurized air to the lower-temperature working fluid in the first boiler and therefore the pressurized air can be adequately cooled. Thus, the waste heat utilization apparatus is capable of adequately improving the output power of the internal-combustion engine. Here, even though heat exchange arises in the first boiler first, heat exchange in the second boiler can be adequately performed as long as the temperature of the heating medium in the second boiler is equal to or higher than the temperature of the pressurized air.

Furthermore, the heat absorption amount adjusting means in the waste heat utilization apparatus having the configuration described above preferably comprises a second bypass channel branching off from one of the pipes downstream of the first boiler, bypassing the second boiler, and coupling to one of the pipes upstream of the expansion machine, a second flow regulating valve capable of adjusting the flow rate of the working fluid flowing into the second boiler and flow rate of the working fluid flowing into the second bypass channel, and second regulating valve control means for controlling the second flow regulating valve (Claim 11).

In this configuration, the temperature of working fluid flowing into the expansion machine can be further increased by flowing the working fluid into the second boiler to heat. On the other hand, when the required amount of cooling of the pressurized air exceeds the threshold value, the working fluid can be flown into the second bypass channel to bypass the heating of the working fluid in the second boiler, thereby lowering the condensation pressure and therefore the temperature of the working fluid flowing into the pump. As a result, the temperature of the working fluid flown into the first boiler can be further lowered. This enables adequate heat dissipation from the pressurized air to the working fluid in the first boiler to lower the temperature of the pressurized air. Thus, the required amount of cooling of the pressurized air can be met. In doing so, the second regulating valve control means can be used to control the second flow regulating valve to adjust the flow rate of working fluid flowing into the second boiler and the flow rate of the working fluid flowing into the second bypass channel and adequately adjust the temperature of the working fluid flowing into the first boiler according to the required amount of cooling of the pressurized air. These adjustments enable the improvement of the amount of energy recovered by the Rankine cycle system in the waste heat utilization apparatus and improvement of the performance of the internal-combustion engine as appropriate.

### ADVANTAGES OF THE INVENTION

A waste heat utilization apparatus according to the present invention provides high performance, is able to be easily mounted in a vehicle and the like, and able to be manufactured at low cost.

### BRIEF DESCRIPTION OF THE DRAWINGS

[FIG. 1] is a schematic structural diagram illustrating a waste heat utilization apparatus of a first embodiment.
[FIG. 2] is a schematic structural diagram relating to the waste heat utilization apparatus of the first embodiment and illustrating how working fluid flows through a coolant boiler into a first boiler.
[FIG. 3] is a schematic structural diagram relating to the waste heat utilization apparatus of the first embodiment and illustrating how working fluid flows through a first bypass channel into a pressurized air boiler.
[FIG. 4] is a schematic structural diagram illustrating a waste heat utilization apparatus of a second embodiment.
[FIG. 5] is a schematic structural diagram relating to the waste heat utilization apparatus of the second embodiment and illustrating how working fluid flows through a pressurized air boiler into an exhaust gas boiler.
[FIG. 6] is a schematic structural diagram relating to the waste heat utilization apparatus of the second embodiment and illustrating how working fluid flows into a second bypass channel and the exhaust gas boiler.
[FIG. 7] is a schematic structural diagram illustrating a waste heat utilization apparatus of a third embodiment.
[FIG. 8] is a schematic structural diagram illustrating a waste heat utilization apparatus of a fourth embodiment.
[FIG. 9] is a schematic structural diagram illustrating a waste heat utilization apparatus of a fifth embodiment.

First to fifth embodiments of the present invention will be described with reference to Figures.

### (First Embodiment)

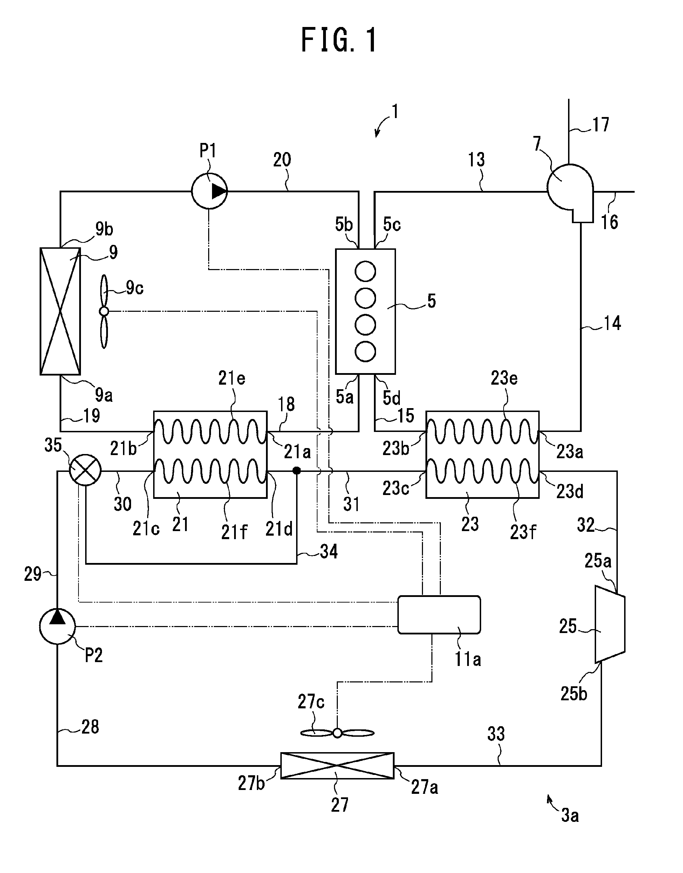

A waste heat utilization apparatus of the first embodiment is mounted in a vehicle and is used for a driving system 1 of the vehicle as illustrated in FIG. 1. The waste heat utilization apparatus includes a Rankine cycle system 3a, a first bypass channel 34, a three-way valve 35, and a controller 11a. The first bypass channel 34, the three-way valve 35 and the controller 11a correspond to the heat absorption amount adjusting means. The controller 11a also serves as the judgment means.

The driving system 1 includes an engine 5, which is an internal-combustion engine, a turbocharger 7 acting as a supercharger, and a radiator 9. The engine 5 is a well-known water-cooled gasoline engine. A water jacket (not depicted) through which LLC, which is coolant, can flow is formed inside the engine 5. The engine 5 has an outlet 5a and an inlet 5b formed therein which communicate with the water jacket. An exhaust gas vent 5c through which exhaust gas exits and an intake 5d for taking in pressurized air, which will be described later, are provided in the engine 5.

The turbocharger 7 and the radiator 9 used are commercially available products. The turbocharger 7 is activated by exhaust gas from the engine 5 and supplies the pressurized air which is produced by pressurizing air outside the vehicle to the engine 5. The radiator 9 has an inlet 9a formed therein through which coolant flows into the radiator 9 and an outlet 9b formed therein through which the coolant flows out of the radiator 9. The radiator 9 causes heat exchange between the coolant flowing inside the radiator 9 and air outside the vehicle. Additionally, an electric fan 9c is provided near the radiator 9. The electric fan 9c is electrically connected to the controller 11a.

The engine 5 and the turbocharger 7 are interconnected through pipes 13 to 15. A pressurized air boiler 23, which will be described later, is connected to the pipes 14 and 15. The pipe 13, through which exhaust gas can flow, is connected to the exhaust gas vent 5c of the engine 5 and the turbocharger 7. The pipes 14 and 15 are designed so that the pressurized air can flows through them. The pipe 14 is connected to the turbocharger 7 and a third inlet 23a of the pressurized air boiler 23. The pipe 15 is connected to a third outlet 23b of the pressurized air boiler 23 and the intake 5d of the engine 5.

Also the turbocharger 7 is connected to one end of each of pipes 16 and 17. The other end of the pipe 16 is connected to a muffler, not depicted. The other end of the pipe 17 is open at an air intake of the vehicle, not depicted. The pipe 16 communicates with the pipe 13 through the turbocharger 7. Similarly, the pipe 17 communicates with the pipe 14 through the turbocharger 7.

The engine 5 and the radiator 9 are interconnected through pipes 18 to 20. A coolant boiler 21, which will be described later, is connected to the pipes 18 and 19. The pipes 18 and 20 are designed so that coolant can flow through them. The pipe 18 is connected to the outlet 5a of the engine 5 and a first inlet 21a of the coolant boiler 21. The pipe 19 is connected to a first outlet 21b of the coolant boiler 21 and an inlet 9a of the radiator 9. The pipe 20 is connected to an outlet 9b of the radiator 9 and the inlet 5b of the engine 5. A first electric pump P1 is provided in the pipe 20. The first electric pump P1, which is commercially available electric pump, is electrically connected to the controller 11a. Note that the first electric pump P1 may be provided in the pipe 18 or the pipe 19.

The Rankine cycle system 3a comprises a second electric pump P2, the coolant boiler 21, the pressurized air boiler 23, an expansion machine 25, a condenser 27, and pipes 28 to 33. In the Rankine cycle system 3a, the first bypass channel 34 and the three-way valve 35 are integrally attached. HFC 134a, which is working fluid, can flow through the pipes 28 to 33 and the first bypass channel 34. The second electric pump P2 is a commercially available electric pump similar to the first electric pump P1. Note that the second electric pump P2 corresponds to the pump and the three-way valve 35 corresponds to the first flow regulating valve.

The first inlet 21a, the first outlet 21b, the second inlet 21c and the second outlet 21d are formed in the coolant boiler 21. A first pathway 21e whose ends communicate with the first inlet 21a and the first outlet 21b and a second pathway 21f whose ends communicate with the second inlet 21c and the second outlet 21d are provided in the coolant boiler 21. In the coolant boiler 21, heat exchange between coolant, which is heating medium, in the first pathway 21e and the working fluid in the second pathway 21f arises to cool the coolant and heat the working fluid. Since coolant is used as the heating medium in this way, the coolant boiler 21 corresponds to the second boiler.

The third inlet 23a, the third outlet 23b, a fourth inlet 23c and a fourth outlet 23d are formed in the pressurized air boiler 23. A third pathway 23e whose ends communicate with the third inlet 23a and the third outlet 23b, and a fourth pathway 23f whose ends communicate with the fourth inlet 23c and the fourth outlet 23d are also provided in the pressurized air boiler 23. In the pressurized air boiler 23, heat exchange between the pressurized air, which is heating medium, in the third pathway 23e and the working fluid in the fourth pathway 23f arises to cool the pressurized air and heat the working fluid. Since pressured air, which is an intake fluid, is used as the heating medium in this way, the pressurized air boiler 23 corresponds to the first boiler.

The expansion machine 25 has an inlet 25a formed therein through which the working fluid flows into the expansion machine 25 and an outlet 25b formed therein through which the working fluid flows out. In the expansion machine 25, the working fluid heated through the second boiler 23 is expanded to produce a rotary drive force. A well-known power generator, not depicted, is connected to the expansion machine 25. The power generator is driven by the drive force from the expansion machine 25 to generate electric power and charges a battery, not depicted.

The condenser 27 has an inlet 27a formed therein through which the working fluid flows into the condenser 27 and an outlet 27b formed therein through which the working fluid flows out. The condenser 27 causes heat exchange between the working fluid flowing inside the condenser 27 and air outside the vehicle to cool and liquefy the working fluid whose pressure has been reduced by expansion in the expansion machine 25. An electric fan 27c is provided near the condenser 27. The electric fan 27c is electrically connected to the controller 11a.

The first bypass channel 34 allows the working fluid to pass through it to allow the working fluid to bypass the coolant boiler 21. The three-way valve 35 is a directional control valve capable of selectively allowing all of the working fluid to flow into the coolant boiler 21 or allowing all of the working fluid to flow into the first bypass channel 34. The three-way valve 35 is electrically connected to the controller 11a.

The second electric pump P2, the coolant boiler 21, the pressurized air boiler 23, the expansion machine 25, the condenser 27, the first bypass channel 34 and the three-way valve 35 are interconnected through pipes 28 to 33. Specifically, the outlet 27b of the condenser 27 and the second electric pump P2 are interconnected through the pipe 28. The second electric pump P2 and the three-way valve 35 are interconnected through the pipe 29. The three-way valve 35 and the second inlet 21c of the coolant boiler 21 are interconnected through the pipe 30. The second outlet 21d of the coolant boiler 21 and the fourth inlet 23c of the pressurized air boiler 23 are interconnected through the pipe 31. The fourth outlet 23d of the pressurized air boiler 23 and the inlet 25a of the expansion machine 25 are interconnected through the pipe 32. The outlet 25b of the expansion machine 25 and the inlet 27a of the condenser 27 are interconnected through the pipe 33. One end of the first bypass channel 34 is connected to the three-way valve 35 while the other end is connected to the pipe 31.

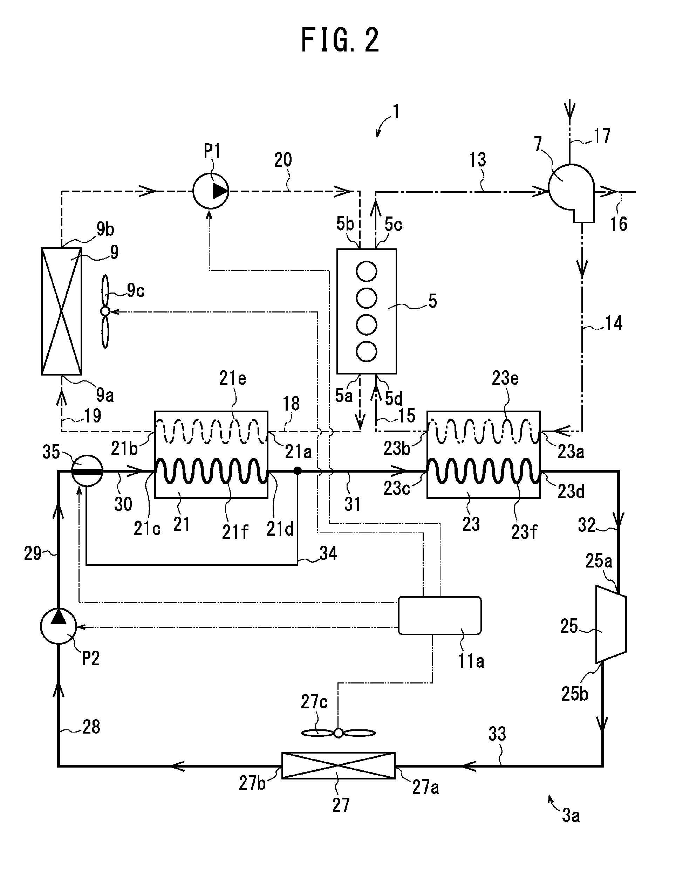

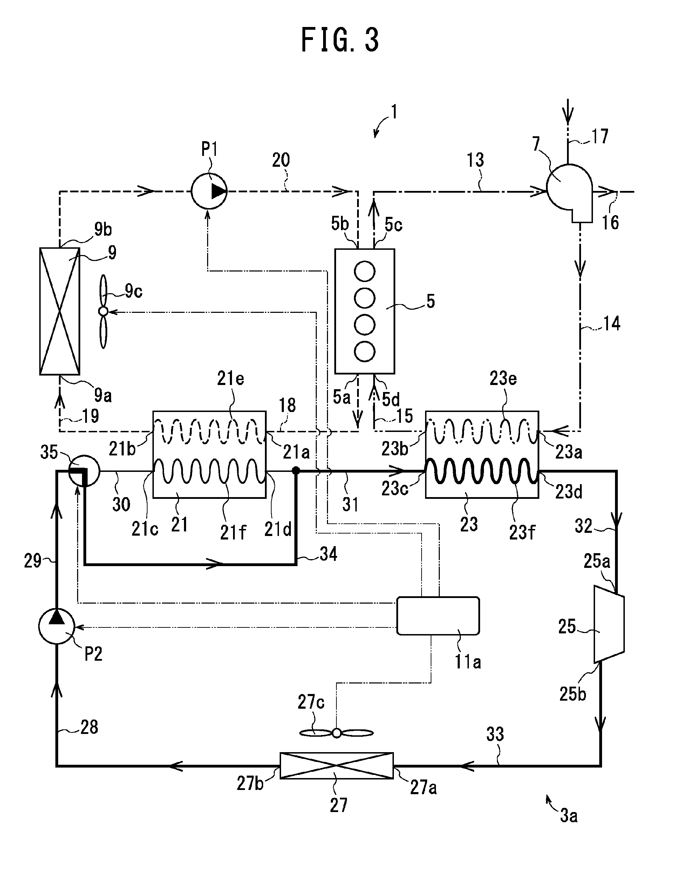

When the second electric pump P2 in the Rankine cycle system 3a is actuated, the working fluid starts to circulate through the pipes 28 to 33, from the second electric pump P2 to the coolant boiler 21 or the first bypass channel 34, and to the pressurized air boiler 23, the expansion machine 25, and the condenser 27, in this order, as illustrated in Figures 2 and 3. That is, the coolant boiler 21 and the first bypass channel 34 are located upstream of the pressurized air boiler 23 in the direction in which the working fluid flows through the Rankine cycle system 3a. Similarly, the three-way valve 35 is located downstream of the second electric pump P2 and upstream of the coolant boiler 21 and the first bypass channel 34.

As illustrated in FIG. 1, the controller 11a controls activation of the electric fans 9c and 27c to adjust the amount of heat dissipated from the coolant or the working fluid to the ambient air. The controller 11a also controls activation of the first and second electric pumps P1 and P2. The controller 11a is configured to be able to detect the throttle opening degree of the vehicle from a signal received from the ECU or the like (not depicted) of the vehicle and is capable of detecting an output power requirement of the engine 5 on the basis of the throttle opening degree. The controller 11a also judges a required amount of cooling of the pressurized air on the basis of the output power requirement of the engine 5. The controller 11a controls switching of the three-way valve 35 on the basis of the required amount of cooling. Thus the controller 11a also serves as the output power requirement detecting means and the first regulating valve control means.

The waste heat utilization apparatus configured as described above operates as described below in response to driving of the vehicle.

As illustrated in FIG. 2, upon driving the vehicle, the engine 5 in the driving system 1 is actuated. This causes exhaust gas from the exhaust gas vent 5c to flow through the pipe 13, the turbocharger 7 and the pipe 16, and exit the vehicle (see the alternate long and short dashed arrows in FIG. 2). In this process, the exhaust gas actuates the turbocharger 7. This causes air outside the vehicle to be drawn through the pipe 17 into the turbocharger 7, where the air is compressed. The air as the pressurized air flows to the pipe 14, the third pathway 23e of the pressurized air boiler 23 and the pipe 15 as the pressurized air, and is drawn into the engine 5 through the intake 5d (see the alternate long and two short dashes arrows in FIG. 2).

The controller 11a also actuates the first and second electric pumps P1 and P2 and the electric fans 9c and 27c. This causes the coolant that has cooled the engine 5 to flow out through the outlet 5a, pass the pipe 18, the first pathway 21e of the coolant boiler 21 and the pipe 19, and enter the radiator 9 through the inlet 9a of the radiator 9. The coolant in the radiator 9 is cooled by heat exchange with air around the radiator 9, that is, by dissipation. During the heat exchange, the controller 11a changes an amount of working of the electric fan 9c as appropriate to suitably dissipate heat from the coolant. The heat-dissipated, cooled coolant flows out through the outlet 9b, passes through the pipe 20 and enters the engine 5 through the inlet 5b of the engine 5 to cool the engine (see the dashed arrows in FIG. 2).

In the Rankine cycle system 3a, the controller 11a controls switching of the three-way valve 35. Here, when the output power requirement of the engine 5 is less than or equal to predetermined value (when the detected throttle opening degree is equal to predetermined value (for example, the throttle opening degree at which the rotation speed of the engine 5 is 1500 rpm)), the controller 11a judges that the required amount of cooling of the pressurized air is less than threshold value. In this case, the controller 11a controls switching of the three-way valve 35 to enables fluid communication between the pipe 29 and the pipe 30, and disables fluid communication of the pipes 29 and 30 with the first bypass channel 34.

This allows the working fluid pumped from the second electric pump P2 to flow through the pipe 30 to the second inlet 21c of the coolant boiler 21 and enter the second pathway 21f as indicated by the solid arrows in FIG. 2. The working fluid is then heat-exchanged with the coolant in the coolant boiler 21. Since the coolant flowing through the first pathway 21e is heated by waste heat from the engine 5 to approximately 80 to 90°C at this point in time, the working fluid flowing through the second pathway 21f is heated to one certain temperature. On the other hand, the coolant flowing through the first pathway 21e dissipates heat to the working fluid flowing through the second pathway 21f, and therefore is cooled to one certain degree before entering the radiator 9.

The working fluid heated in the coolant boiler 21 flows out through the second outlet 21d, passes through the pipe 31 to the fourth inlet 23c of the pressurized air boiler 23, and enters the fourth pathway 23f. The working fluid is then heat-exchanged with the pressurized air in the pressurized air boiler 23. Since the pressurized air flowing through the third pathway 23e is compressed by the turbocharger 7 to have temperature approximately 150°C at this point in time, the working fluid flowing through the third pathway 23f is heated to higher temperature. On the other hand, the pressurized air flowing through the third pathway 23e dissipates heat to the working fluid flowing through the fourth pathway 23f, and therefore is cooled to one certain degree before entering the engine 5.

The working fluid thus heated by the coolant boiler 21 and the pressurized air boiler 23 flows out through the fourth outlet 23d at high temperature and high pressure, passes through the pipe 32, and enters the expansion machine 25 through the inlet 25a of the expansion machine 25. The high-temperature and high-pressure working fluid then expands in the expansion machine 25, and the pressure of the working fluid is reduced. The pressure energy produced at this stage causes the power generator connected to the expansion machine 25 to generate electric power.

The working fluid whose pressure is decreased in the expansion machine 25 flows out through the outlet 25b, passes through the pipe 33, and enters the condenser 27, through the inlet 27a of the condenser 27. The working fluid in the condenser 27 dissipates heat to air around the condenser 27, and is thereby cooled. During this process, the controller 11a changes the amount of working of the electric fan 27c as appropriate to suitably dissipate heat from the working fluid, thereby liquefying the working fluid. The cooled working fluid flows out through the outlet 27b, passes through the pipes 28 to 30 and reenters the coolant boiler 21.

When the output power requirement of the engine 5 exceeds the predetermined value, that is, when the throttle opening degree detected exceeds the predetermined value, the required amount of cooling of the pressurized air increases. This is because in order to increase the output power of the engine 5, a larger amount of the pressurized air needs to be supplied to the engine 5 and, to achieve this, the pressurized air needs to be further cooled to increase its density, and to that end the pressurized air needs to be further cooled in the pressurized air boiler 23. When the controller 11a judges on the basis of the output power requirement of the engine 5 that the required amount of cooling of the pressured air exceeds threshold value, the controller 11a controls switching of the three-way valve 35 according to the judgment. As a result, in the Rankine cycle system 3a of the waste heat utilization apparatus, fluid communication between the pipe 29 and the first bypass channel 34 is enabled, and fluid communication of the pipe 29 and the first bypass channel 34 with the pipe 30 is disabled as illustrated in FIG. 3.

This allows the working fluid pumped from the second electric pump P2 to flow into the first bypass channel 34 through the pipe 29 as indicated by the solid arrows in FIG. 2. The working fluid in the first bypass channel 34 bypasses the coolant boiler 21, and flows into the pipe 31 to reach the fourth pathway 23f of the pressurized air boiler 23.

Here, the working fluid flowing from the first bypass channel 34 has not undergone heat exchange in the coolant boiler 21, that is, the amount of heat absorbed in the working fluid in the coolant boiler 21 is smaller than that in the situation illustrated in FIG. 2. Therefore the working fluid flows into the pressurized air boiler 23 at lower temperature than in the situation illustrated in FIG. 2. Accordingly, the working fluid receives more heat from the pressurized air in heat exchange in the pressurized air boiler 23. As a result, the pressurized air is more cooled.

The working fluid heated in the pressurized air boiler 23 flows out through the fourth outlet 23d, is expanded and decompressed by the expansion machine 25 like the situation illustrated in FIG. 2, then heat is dissipated from the working fluid by the condenser 27. Note that, as illustrated in FIG. 3, when the first bypass channel 34 is used to prevent the working fluid from flowing into the coolant boiler 21, heat exchange does not arise in the coolant boiler 21. Therefore, the controller 11a preferably increases the amount of working of the electric fan 9c to increase the amount of heat dissipated from the coolant in the radiator 9.

As has been described, the Rankine cycle system 3a in the waste heat utilization apparatus has the coolant boiler 21 located upstream in the direction in which the working fluid circulates and the pressurized air boiler 23 located downstream. Accordingly, the working fluid heated in the coolant boiler 21 can be further heated in the pressurized air boiler 23.

Furthermore, the waste heat utilization apparatus is capable of cooling the pressurized air by heat exchange in the pressurized air boiler 23. Here, the waste heat utilization apparatus includes the controller 11a, the first bypass channel 34 and the three-way valve 35. This enables the amount of heat absorbed in the working fluid in the coolant boiler 21 in the waste heat utilization apparatus to be reduced when the required amount of cooling of the pressurized air exceeds the threshold value. Thus, by adjusting the temperature of the working fluid flowing into the pressurized air boiler 23, the amount of energy recovered by the Rankine cycle system 3a and the output power of the engine 5 can be increased as appropriate.

Specifically, when the output power requirement of the engine 5 is low and the required amount of cooling of the pressurized air is smaller than the threshold value, the working fluid is heated in the coolant boiler 21 as illustrated in FIG. 2, that is, the amount of heat absorbed in the working fluid in the coolant boiler 21 is maximized to cool the coolant while the temperature of the working fluid flowing out from the coolant boiler 21 can be increased. This can increase the temperature of the working fluid flowing into the pressurized air boiler 23, and therefore increase the temperature of the working fluid flowing out of the pressurized air boiler 23. Consequently, the pressure energy when the working fluid is expanded and decompressed in the expansion machine 25 can be increased. As a result, the amount of energy recovered in the Rankine cycle system 3a, that is, the electrical energy can be increased.

On the other hand, when the output power requirement of the engine 5 is large and the required amount of cooling of the pressurized air exceeds the threshold value, the first bypass channel 34 is used to minimize the amount of heat absorbed in the working fluid (to zero) in the coolant boiler 21 as illustrated in FIG. 3. This can decrease the temperature of the working fluid flowing into the pressurized air boiler 23, where the pressurized air can be sufficiently cooled. In this case, a larger amount of the pressurized air can be supplied to the engine 5 and the engine 5 operates with a higher output power. Thus, the output power requirement of the engine 5 can be met.

Furthermore, in the waste heat utilization apparatus, the pressurized air boiler 23 serves as an intercooler for the pressurized air and the cooling ability of the pressurized air in the pressurized air boiler 23 is not impaired by the existence of the coolant boiler 21. Accordingly, the waste heat utilization apparatus does not require an extra dedicated intercooler and therefore is small in size and has a simplified structure.

Furthermore, in the waste heat utilization apparatus, the controller 11a is capable of accurately judging the required amount of cooling of the pressurized air on the basis of the output power requirement of the engine 5.

Thus, the waste heat utilization apparatus of the first embodiment provides high performance, is able to be easily mounted in a vehicle and the like, and able to be manufactured at low cost.

### (Second Embodiment)

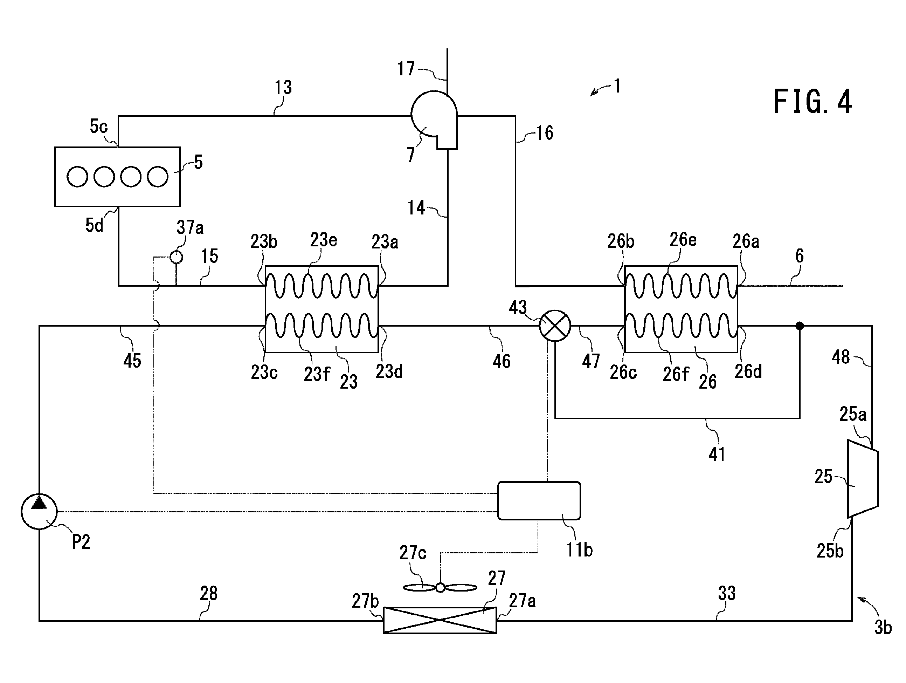

A waste heat utilization apparatus of a second embodiment has a configuration partially modified from the waste heat utilization apparatus of the first embodiment. As illustrated in FIG. 4, the waste heat utilization apparatus comprises a Rankine cycle system 3b, a first temperature sensor 37a, a second bypass channel 41, a second flow regulating valve 43 and a controller 11b. The first temperature sensor 37a corresponds to the first temperature detecting means. The second bypass channel 41, the second flow regulating valve 43 and the controller 11b correspond to the heat absorption amount adjusting means. Like the controller 11a in the first embodiment, the control means 11 serves as the judgment means. In the waste heat utilization apparatus, an exhaust gas boiler 26 is provided in place of the coolant boiler 21. Note that the radiator 9 and pipes 18 to 20 and some components are omitted from Figures 4 to 6.

As illustrated in FIG. 4, one end of a pipe 16 in the driving system 1 is connected to a fifth inlet 26a of the exhaust gas boiler 26, which will be described later. One end of a pipe 6 is connected to a fifth outlet 26b of the exhaust gas boiler 26. The other end of the pipe 6 is connected to a muffler, not depicted. With the connections, exhaust gas produced in the engine 5 is guided through a pipe 13, a turbocharger 7, the pipe 16, the exhaust gas boiler 26 and the pipe 6 to the muffler and then is discharged out of the vehicle.

The first temperature sensor 37a is disposed in a pipe 15. The first temperature sensor 37a is electrically connected to the controller 11b. The first temperature sensor 37a detects the temperature of the pressurized air flowing out of a third outlet 23b of a pressurized air boiler 23 and flowing through a pipe 15, and sends the detected value to the controller 11b. Note that the first temperature sensor 37a is a commercially available temperature sensor.

The Rankine cycle system 3b comprises the exhaust gas boiler 26, pipes 45 to 48, a second electric pump P2, the pressurized air boiler 23, an expansion machine 25, a condenser 27 and pipes 28 and 33. In the Rankine cycle system 3b, the second bypass channel 41 and the second flow regulating valve 43 are integrally attached. HFC 134a, which is working fluid, can flow through the pipes 45 to 48 and the second bypass channel 41.

The fifth inlet 26a, a fifth outlet 26b, a sixth inlet 26c and a sixth outlet 26d are formed in the exhaust gas boiler 26. A fifth pathway 26e that communicates with the fifth inlet 26a and the fifth outlet 26b at its ends, and a sixth pathway 26f that communicates with a sixth inlet 26c and a sixth outlet 26d at its ends are provided inside the exhaust gas boiler 26. The exhaust gas boiler 26 causes heat exchange between exhaust gas, which is heating medium, in the fifth pathway 26e, and the working fluid in the sixth pathway 26f to heat the working fluid and, as a secondary effect of the heating, cools the exhaust gas. Since the exhaust gas to be discharged to the outside the vehicle (exhaust gas in the narrow sense) is used as the heating medium in this way, the exhaust gas boiler 26 corresponds to the second boiler.

The second bypass channel 41 allows the working fluid to pass through it to allow the working fluid to bypass the exhaust gas boiler 26. The second flow regulating value 43 is capable of changing flow rate of the working fluid flowing into the exhaust gas boiler 26 and the flow rate of the working fluid flowing into the second bypass channel 41. The second flow regulating valve 43 is electrically connected to the controller 11b.

The second electric pump P2 and a fourth inlet 23c of the pressurized air boiler 23 are interconnected through the pipe 45. A fourth outlet 23d of the pressurized air boiler 23 and the second flow regulating valve 43 are interconnected through the pipe 46. The second flow regulating valve 43 and the sixth inlet 26c of the exhaust gas boiler 26 are interconnected through the pipe 47. The sixth outlet 26d of the exhaust gas boiler 26 and an inlet 25a of the expansion machine 25 are interconnected through the pipe 48. Note that the connection between the expansion machine 25 and the condenser 27, and the connection between the condenser 27 and the second electric pump P2 are the same as those in the first embodiment.

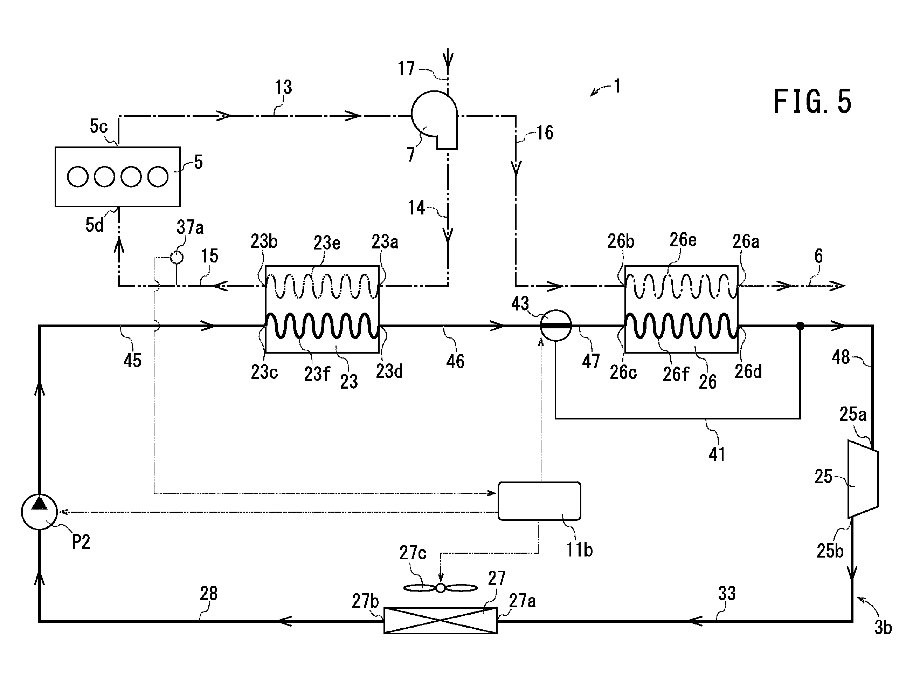

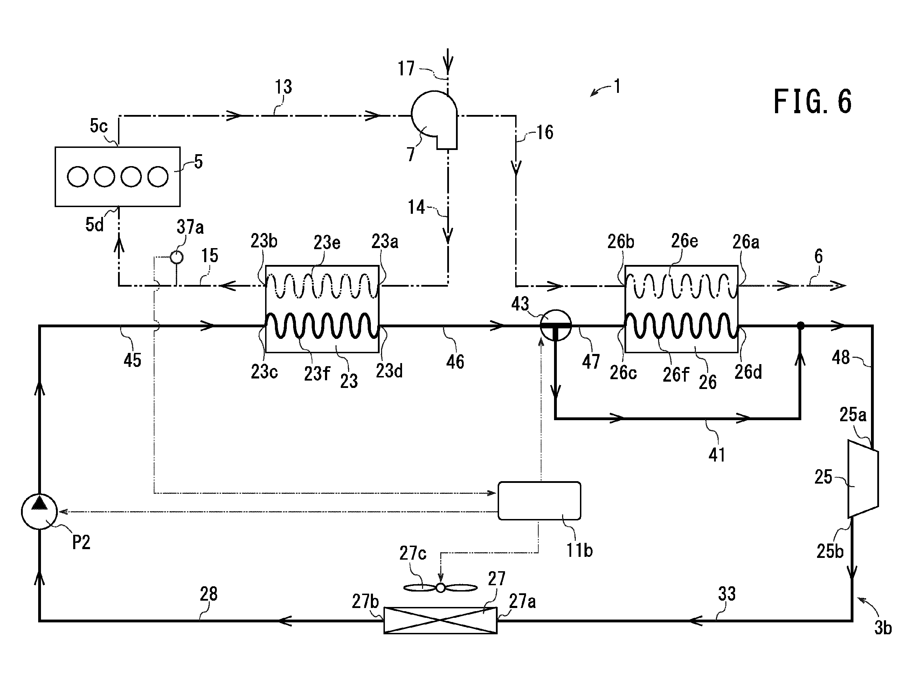

In the Rankine cycle system 3b, when the second electric pump P2 is actuated, the working fluid starts to circulate through the pipes 28, 33 and 45 to 48, from the electric pump P2, through the pressurized air boiler 23, the exhaust gas boiler 26 or the second bypass channel 41 to the expansion machine 25, further to the condenser 27 as illustrated in Figures 5 and 6. That is, the pressurized air boiler 23 is located upstream of the second bypass channel 41 and the exhaust gas boiler 26 in the direction in which the working fluid flows in the Rankine cycle system 3b. The second bypass channel 41 is located upstream of the exhaust gas boiler 26. The second bypass channel 43 couples to the pipe 48 at a point upstream of the expansion machine 25.

The controller 11b judges a required amount of cooling of the pressurized air on the basis of the temperature of the pressurized air detected by the first temperature sensor 37a. Based on the required amount of cooling, the controller 11b adjusts the flow rate at the second flow regulating valve 43. Thus, the controller 11b serves as the second regulating valve control means in the waste heat utilization apparatus. Like the controller 11a in the first embodiment, the controller 11b controls actuation of the first and second electric pumps P1 and P2, the electric fan 27c and others. The other components of the waste heat utilization apparatus is the same as the waste heat utilization apparatus of the first embodiment, therefore like components are given like reference numerals and repeated description thereof will be omitted.

The waste heat utilization apparatus configured as described above operates as described below in response to driving of the vehicle.

As illustrated in FIG. 5, in the waste heat utilization apparatus, like the waste heat utilization apparatus of the first embodiment, the pressurized air compressed by the turbocharger 7 flows through the pipe 14, the pressurized air boiler 23 and the pipe 15 and is drawn into the engine 5 (see the chain double-dashed arrows in FIG. 5). Exhaust gas from the engine 5 flows through the pipe 13, the turbocharger 7 and the pipe 16 into the exhaust gas boiler 26, and flows through the fifth pathway 26e (see the alternate long and short dashed lines in FIG. 5).

The controller 11b actuates the first and second electric pumps P1 and P2, electric fan 27c and other components. The controller 11b judges a required amount of cooing of the pressurized air on the basis of a detected value sent from the first temperature sensor 37a. Here, when the detected value sent from the first temperature sensor 37a is small, it can be said that the pressurized air has been sufficiently cooled by heat exchange in the pressurized air boiler 23. Accordingly, the controller 11b judges that the required amount of cooling of the pressurized air is smaller than threshold value, and adjusts the second flow regulating valve 43 accordingly. Specifically, the controller 11b adjusts the second flow regulating valve 43 to allow all of the working fluid flowing through the pipe 46 to flow into the pipe 47, so that none of the working fluid flows through the second bypass channel 41.

As a result, the working fluid flowing from the pressurized air boiler 23 passes through the pipe 46 and flows through the sixth inlet 26c of the exhaust gas boiler 26 into the sixth pathway 26f. The working fluid is then heat-exchanged with the exhaust gas in the exhaust gas boiler 26. With this, the exhaust gas in the fifth pathway 26e is cooled to one certain degree and flows out through the fifth outlet 26b, follows through the pipe 6, and is discharged to the outside the vehicle through a muffler.

Since the Rankine cycle system 3c in the waste heat utilization apparatus comprises the pressurized air boiler 23 located upstream in the direction in which the working fluid circulates and the exhaust gas boiler 26 located downstream, the working fluid heated in the pressurized air boiler 23 can be reheated in the exhaust gas boiler 26. Here, the exhaust gas, which is the heating medium in the exhaust gas boiler 26, has temperature of approximately 500°C, which is higher than the temperature of the pressurized air, therefore the working fluid flowing through the sixth pathway 26f is reheated to higher temperature. The working fluid thus heated in the pressurized air boiler 23 and the exhaust gas boiler 26 expands in the expansion machine 25, and the pressure of the working fluid decreases like the waste heat utilization apparatus of the first embodiment. At this time, the generator connected to the expansion machine 25 generates electric power. The working fluid whose pressure is reduced in the expansion machine 25 dissipates heat to ambient air in the condenser 27 to cool down.

In this way, since the working fluid can be heated by the pressurized air boiler 23 and the exhaust gas boiler 26 in the waste heat utilization apparatus, a large amount of electric power can be recovered in the Rankine cycle system 3b.

On the other hand, when the detected value sent from the first temperature sensor 37a is large, it means that the required amount of cooling of the pressurized air is large (the ability of the heat exchange to cool the pressurized air in the pressurized air boiler 23 is presently insufficient). Based on the detected value, the controller 11b judges that the required amount of cooling of the pressurized air exceeds the threshold value, and controls the second flow regulating valve 43 accordingly. Specifically, the controller 11b allows part of the working fluid flowing through the pipe 46 to flow into the second bypass channel 41 to reduce the flow rate of the working fluid that flows into the exhaust gas boiler 26 through the pipe 47, as illustrated in FIG. 6.

Thus, as indicated by the solid arrows in FIG. 5, the working fluid flowing into the second bypass channel 41 bypasses the exhaust gas boiler 26 and flows into the pipe 48. The working fluid that has flown through the second bypass channel 41 has not undergone heat exchange in the exhaust gas boiler 26, that is, the amount of heat absorbed in the working fluid in the exhaust gas boiler 26 is smaller than that in the situation in FIG. 5. Accordingly, the temperature of the working fluid flowing through the expansion machine 25 and condenser 27 and reentering the pressurized air boiler 23 is lower than that in the situation illustrated in FIG. 5. Accordingly, the working fluid receives more heat from the pressurized air in heat exchange in the pressurized air boiler 23. As a result, the pressurized air is more cooled, and the temperature of the pressurized air flowing through the pipe 15 decreases below the threshold value. Note that even when the flow rate of the working fluid entering the exhaust gas boiler 26 decreases, reduction in the amount of electric power recoverable in the Rankine cycle system 3b is minimized because the working fluid is adequately heated in the heat exchange in the pressurized air boiler 23.

In this way, the waste heat utilization apparatus, like the waste heat utilization apparatus of the first embodiment, is capable of sufficiently cool the pressurized air in the pressurized air boiler 23 (capable of serving well as an intercooler for the pressurized air) despite the existence of the exhaust gas boiler 26. Accordingly, the waste heat utilization apparatus does not require an extra dedicated intercooler, is smaller in size and has a simplified structure.

Furthermore, in the waste heat utilization apparatus, the controller 11b is capable of accurately judging the required amount of cooling of the pressurized air on the basis of the temperature of the pressurized air flowing from the pressurized air boiler 23. The other advantages of the waste heat utilization apparatus are the same as those of the waste heat utilization apparatus of the first embodiment.

Thus, the waste heat utilization apparatus of the second embodiment provides high performance, is able to be easily mounted in a vehicle and the like, and able to be manufactured at low cost.

### (Third Embodiment)

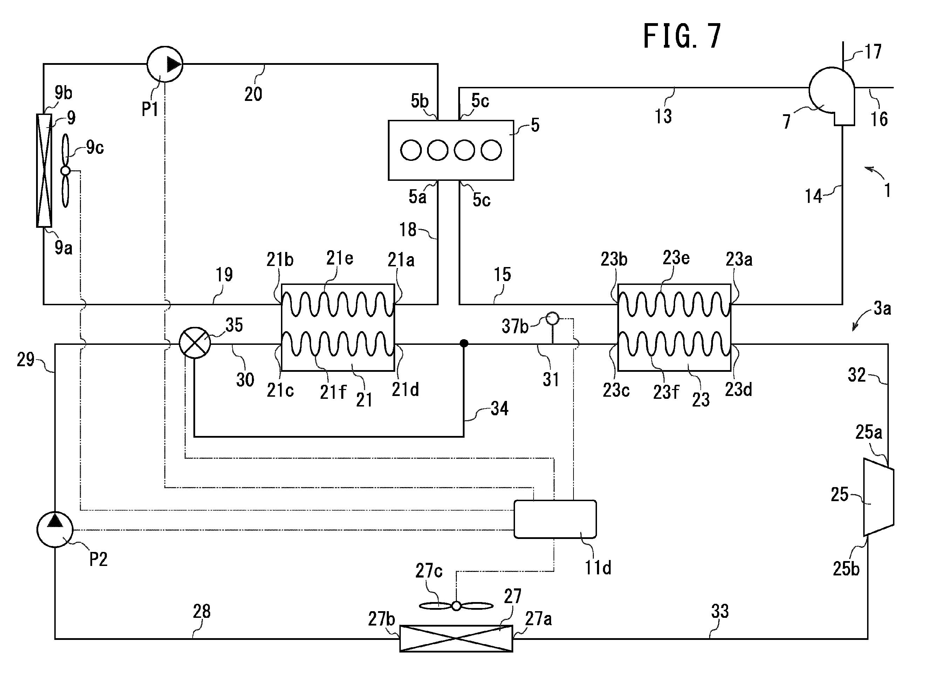

A waste heat utilization apparatus of a third embodiment comprises a controller 11c illustrated in FIG. 7 in place of the controller 11a in the waste heat utilization apparatus of the first embodiment. The waste heat utilization apparatus also comprises a second temperature sensor 37b. In the waste heat utilization apparatus, a first bypass channel 34, a three-way valve 35 and the controller 11c correspond to the heat absorption amount adjusting means. The controller 11c also serves as the judgment means. The second temperature sensor 37b corresponds to the second temperature detecting means.

The second temperature sensor 37b is provided in a pipe 31. The second temperature sensor 37b is electrically connected to the controller 11c. The second temperature sensor 37b detects the temperature of working fluid flowing through the pipe 31, that is, the temperature of the working fluid before flowing into a fourth inlet 23c of a pressurized air boiler 23, and sends value of the detected temperature to the controller 11c. Note that the second temperature sensor 37b is a commercially available temperatures sensor similar to the first temperature sensor 37a.

The controller 11c controls actuation of electric fans 9c and 27c and first and second electric pumps P1 and P2. The controller 11c also judges a required amount of cooling of the pressurized air on the basis of the temperature of the working fluid detected by the second temperature sensor 37b. That is, when the temperature of the working fluid is higher than predetermined value, the ability to cool the pressurized air in the pressurized air boiler 23 is low, and therefore the required amount of cooling of the pressurized air will be relatively large. Based on the required amount of cooling, the controller 11c controls switching of the three-way valve 35. Thus, the controller 11c also serves as the first regulating valve adjusting means. The other components of the waste heat utilization apparatus are the same as those of the first embodiment.

In the waste heat utilization apparatus, like the waste heat utilization apparatus of the first embodiment, the controller 11c controls actuation of the electric fans 9c and 27c and the first and second electric pumps P1 and P2 during driving of the vehicle. The controller 11c in the waste heat utilization apparatus judges that the required amount of cooling of the pressurized air is smaller than threshold value when detected value sent from the second temperature sensor 37b is small. In this case, the controller 11c controls switching of the three-way valve 35 to allow all of the working fluid flowing through a pipe 29 to flow into a pipe 30, so that none of the working fluid flows through the first bypass channel 34, like the waste heat utilization apparatus of the first embodiment. Thus, in the waste heat utilization apparatus, the coolant boiler 21 and the pressurized air boiler 23 heat the working fluid to increase the pressure energy of the working fluid, thereby a large amount of electric power can be recovered in the Rankine cycle system 3a.

On the other hand, as the temperature of the working fluid before entering the pressurized air boiler 23 increases, the value detected at the second temperature sensor 37b increases and the required amount of cooling of the pressurized air increases. When the controller 11c judges on the basis of the detected value sent from the second temperature sensor 37b that the required amount of cooling of the pressurized air exceeds the threshold value, the controller 11c controls switching of the three-way valve 35 according to the judgment. Specifically, like the waste heat utilization apparatus of the first embodiment, fluid communication between the pipe 29 and the first bypass channel 34 is enabled, and fluid communication of the pipe 29 and the first bypass channel 34 with the pipe 30 is disabled. As a result, the amount of heat absorbed in the working fluid in the coolant boiler 21 decreases and the pressurized air is more cooled in the pressurized air boiler 23 in the waste heat utilization apparatus.

Furthermore, in the waste heat utilization apparatus, the controller 11c is capable of accurately judging the required amount of cooling of the pressurized air like the waste heat utilization apparatus of the first embodiment, on the basis of the temperature of the working fluid before entering the pressurized air boiler 23. The other advantages of the waste heat utilization apparatus are the same as those of the waste heat utilization apparatus of the first embodiment.

Thus, the waste heat utilization apparatus of the third embodiment provides high performance, is able to be easily mounted in a vehicle and the like, and able to be manufactured at low cost.

### (Fourth Embodiment)

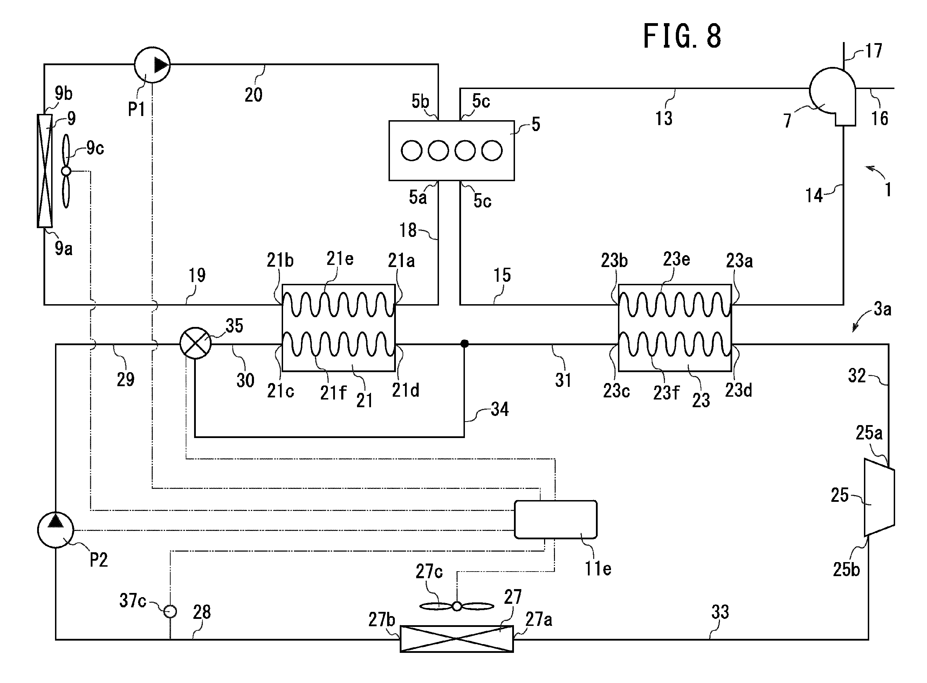

A waste heat utilization apparatus of a fourth embodiment comprises a controller 11d illustrated in FIG. 8 in place of the controller 11a in the waste heat utilization apparatus of the first embodiment. The waste heat utilization apparatus also comprises a third temperature sensor 37c. In the waste heat utilization apparatus, a first bypass channel 34, a three-way valve 35 and controller 11d correspond to the heat absorption amount adjusting means. The controller 11d also serves as the judgment means. The third temperature sensor 37c corresponds to the third temperature detecting means.

The third temperature sensor 37c is provided in a pipe 28. The third temperature sensor 37c is electrically connected to the controller 11d. The third temperature sensor 37c detects the temperature of working fluid flowing through the pipe 28, that is the temperature of the working fluid before entering a second electric pump P2 and, sends detected value to the controller 11d. Note that the third temperature sensor 37c is a commercially available temperature sensor similar to the first temperature sensor 37a.

The controller 11d controls actuation of electric fans 9c and 27c and first and second electric pumps P1 and P2. The controller 11d also judges a required amount of cooling of the pressurized air on the basis of the temperature of the working fluid detected by the third temperature sensor 37c. Based on the required amount of cooling, the controller 11d controls switching of the three-way valve 35. Thus, the controller 11d also serves as the first regulating valve adjusting means. The other components of the waste heat utilization apparatus are the same as those of the first embodiment.

In the waste heat utilization apparatus, like the waste heat utilization apparatus of the first embodiment, the controller 11d controls actuation of the electric fans 9c and 27c and the first and second electric pumps P1 and P2 during driving of the vehicle. The controller 11d in the waste heat utilization apparatus judges that the required amount of cooling of the pressurized air is smaller than threshold value when detected value sent from the third temperature sensor 37c is small. In this case, the controller 11d controls switching of the three-way valve 35 to allow all of the working fluid flowing through a pipe 29 to flow into a pipe 30 like the waste heat utilization apparatus of the first embodiment, like the waste heat utilization apparatus of the first embodiment, so that none of the working fluid flows through the first bypass channel 34. Thus, in the waste heat utilization apparatus, the coolant boiler 21 and the pressurized air boiler 23 heat the working fluid to increase the pressure energy of the working fluid, thereby a large amount of electric power can be recovered in the Rankine cycle system 3a.

On the other hand, as the temperature of the working fluid before entering the second electric pump P2 increases, the value detected at the third temperature sensor 37c increases. In this case, the controller 11d judges that the required amount of cooling of the pressurized air is large. This is because when the temperature of the working fluid flowing into the second electric pump P2 is high, the working fluid has been heated to high temperature in the pressurized air boiler 23, and it can be judged that the temperature of the pressurized air, which is the heating medium, is high. When the controller 11d judges on the basis of the detected value sent from the third temperature sensor 37c that the required amount of cooling of the pressurized air exceeds the threshold value, the controller 11d controls switching of the three-way valve 35 according to the judgment. Specifically, like the waste heat utilization apparatus of the first embodiment, fluid communication between the pipe 29 and the first bypass channel 34 is enabled, and fluid communication of the pipe 29 and the first bypass channel 34 with the pipe 30 is disabled. As a result, the amount of heat absorbed in the working fluid in the coolant boiler 21 decreases, and the pressurized air is more cooled in the pressurized air boiler 23 in the waste heat utilization apparatus.

Furthermore, in the waste heat utilization apparatus, the controller 11d is capable of accurately judging the required amount of cooling of the pressurized air on the basis of the temperature of the working fluid before entering the second electric pump P2. The other advantages of the waste heat utilization apparatus are the same as those of the waste heat utilization apparatus of the first embodiment.

Thus, the waste heat utilization apparatus of the fourth embodiment provides high performance, is able to be easily mounted in a vehicle and the like, and able to be manufactured at low cost.

### (Fifth Embodiment)

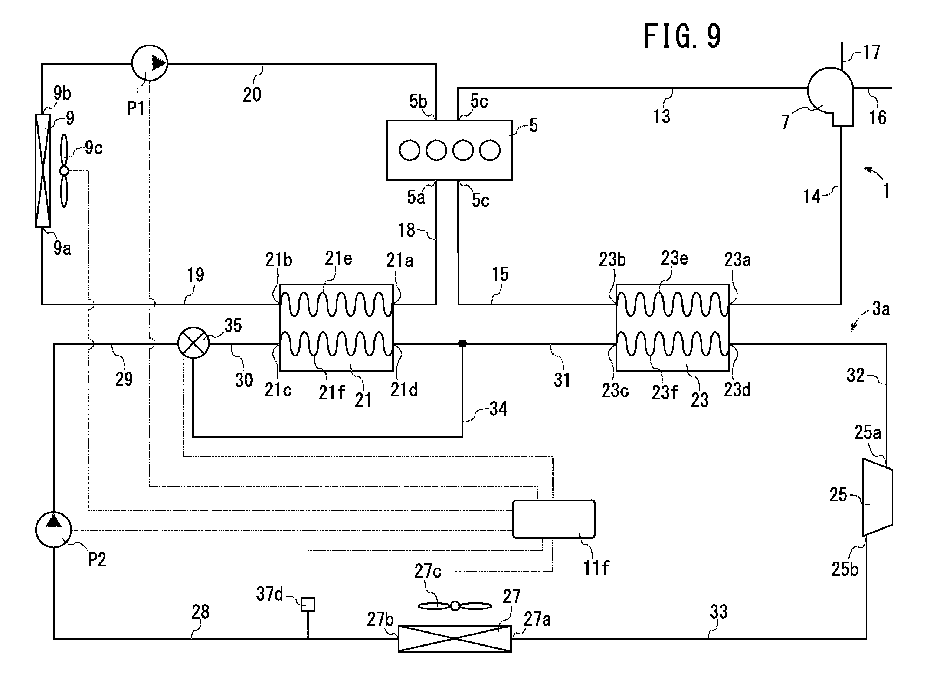

A waste heat utilization apparatus of a fifth embodiment comprises a controller 11e illustrated in FIG. 9 in place of the controller 11a in the waste heat utilization apparatus of the first embodiment. The waste heat utilization apparatus also comprises a pressure sensor 37d. In the waste heat utilization apparatus, a first bypass channel 34, a three-way valve 35 and the controller 11e correspond to the heat absorption amount adjusting means. The controller 11e also serves as the judgment means. The pressure sensor 37d corresponds to the pressure detecting means.

The pressure sensor 37d is provided in a pipe 28. The pressure sensor 37d is electrically connected to the controller 11e. The pressure sensor 37d detects the pressure of working fluid flowing through a pipe 28, that is, the pressure (condensation pressure) of the working fluid from downstream of an expansion machine 25 to upstream of a second electric pump P2, and sends the detected value to the controller 11e. Note that the pressure sensor 37d is a commercially available pressure sensor.

The controller 11e controls actuation of electric fans 9c and 27c and first and second electric pumps P1 and P2. The controller 11e also judges a required amount of cooling of the pressurized air on the basis of the condensation pressure of the working fluid detected by the pressure sensor 37d. Based on the required amount of cooling, the controller 11e controls switching of the three-way valve 35. Thus, the controller 11e also serves as the first regulating valve adjusting means. The other components of the waste heat utilization apparatus are the same as those of the first embodiment.

In the waste heat utilization apparatus, like the waste heat utilization apparatus of the first embodiment, the controller 11e controls actuation of the electric fans 9c and 27c and the first and second electric pumps P1 and P2 during driving of the vehicle. The controller 11e in the waste heat utilization apparatus judges that the required amount of cooling of the pressurized air is smaller than threshold value when detected value sent from the pressure sensor 37d is small. In this case, the controller 11e controls switching of the three-way valve 35 to allow all of the working fluid flowing through a pipe 29 to flow into a pipe 30 like the waste heat utilization apparatus of the first embodiment, so that none of the working fluid flows through the first bypass channel 34. Thus, in the waste heat utilization apparatus, the coolant boiler 21 and the pressurized air boiler 23 heat the working fluid to increase the pressure energy of the working fluid, thereby a large amount of electric power can be recovered in the Rankine cycle system 3a.

On the other hand, as the condensation pressure of the working fluid from downstream of the expansion machine 25 to upstream of the second electric pump P2 increases, the value detected at the pressure sensor 37d increases. In this way, as the condensation pressure of the working fluid increases, the controller 11e judges that the required amount of cooling of the pressurized air is large. This is because when the condensation pressure of the working fluid flowing through the pipe 28 after flowing through the condenser 27 is high, the working fluid has been heated to high temperature in the pressurized air boiler 23, that is, it can be judged that the temperature of the pressurized air, which is the heating medium, is high. When the controller 11e judges on the basis of the detected value sent from the pressure sensor 37d that the required amount of cooling of the pressurized air exceeds the threshold value, the controller 11e controls switching of the three-way valve 35 according to the judgment. Specifically, like the waste heat utilization apparatus of the first embodiment, fluid communication between the pipe 29 and the first bypass channel 34 is enabled, and fluid communication of the pipe 29 and the first bypass channel 34 with the pipe 30 is disabled. As a result, the amount of heat absorbed in the working fluid in the coolant boiler 21 decreases, and the pressurized air is more cooled in the pressurized air boiler 23 in the waste heat utilization apparatus.

### Furthermore, in the waste heat utilization apparatus, the controller 11e is capable of accurately judging the required amount of cooling of the pressurized air on the basis of the condensation pressure of the working fluid from downstream of the expansion machine 25 to upstream of the second electric pump P2. The other advantages of the waste heat utilization apparatus are the same as those of the waste heat utilization apparatus of the first embodiment.

Thus, the waste heat utilization apparatus of the fifth embodiment provides high performance, is able to be easily mounted in a vehicle and the like, and able to be manufactured at low cost.

While the present invention has been described in the context of the first to fifth embodiments, the present invention is not limited to the first to fifth embodiments and can be applied with modifications made as appropriate without departing from the spirit of the present invention.

For example, in the waste heat utilization apparatus of the first embodiment, the first temperature sensor 37a may be provided in the pipe 15 and the controller 11a may judge a required amount of cooling of the pressurized air on the basis of value detected by the first temperature sensor 37a.

Furthermore, the controller 11b to 11e in the waste heat utilization apparatus of any of the second to fifth embodiments may be configured to be able to detect the throttle opening degree of the vehicle and, to be able to detect an output power requirement of the engine 5 on the basis of the throttle opening degree, and to judge a required amount of cooling of the pressurized air on the basis of the output power requirement of the engine 2.

Furthermore, the controller 11a to 11e in the waste heat utilization apparatus of any of the first to fifth embodiments may be configured to detect a vehicle speed and to judge a required amount of cooling of the pressurized air on the basis of the vehicle speed. Here, when the vehicle speed exceeds one certain speed, the working fluid in the condenser 27 will be adequately dissipated in the condenser 27. This decreases the temperature of the working fluid flowing through the pipe 28. In other words, the condensation pressure of the working fluid flowing through the pipe 28 decreases. In this case, the pressurized air can be sufficiently cooled in the pressurized air boiler 23. That is, the ability cooling the pressurized air in the pressurized air boiler 23 is presently sufficient, and the controller 11a to 11e can judge that cooling requirement for the pressurized air is small. On the other hand, when the vehicle speed is lower than one certain speed, the ability to cool the working fluid in the condenser 27 decreases, and therefore the temperature (condensation pressure) of the working fluid flowing through the pipe 28 increases. In this case, the ability of cooling the pressurized air in the pressurized air boiler 23 is presently insufficient. The controller 11a to 11e judges that the required amount of cooling of the pressurized air is large, and decreases the amount of heat absorption in the working fluid in the coolant boiler 21 or the exhaust gas boiler 26.

Temperature detecting means (such as a temperature sensor) capable of detecting the temperature of the pressurized air flowing through the pipe 14, that is, the temperature of the pressurized air before flowing into the pressurized air boiler 23 may be provided in the waste heat utilization apparatus of any of the first to fifth embodiment, and the controller 11a to 11e may be configured to judge a required amount of cooling of the pressurized air on the basis of the temperature of the pressurized air. In this case, when the temperature of the pressurized air before flowing into the pressurized air boiler 23 is high, the temperature of the pressurized air flowing out from the pressurized air boiler 23 will be high. Therefore, the controller 11a to 11e can judge that the required amount of cooling of the pressurized air is large.

Furthermore, the controller 11a to 11e in the waste heat utilization apparatus of any of the first to fifth embodiments may be configured to judge a required amount of cooling of the pressurized air on the basis of a combination of the output power requirement of the engine 5, values detected by the first to third temperature sensors 37a to 37c and the pressure sensor 37d, the vehicle speed, the temperature of the pressurized air before flowing into the pressurized air boiler 23.

The three-way valve 35 in the waste heat utilization apparatus of any of the first and third to fifth embodiments may be replaced with a flow regulating valve similar to the second flow regulating valve 43. This can be used to change flow rate of the working fluid flowing from the pipe 29 into the coolant boiler 21 and the flow rate of the working fluid flowing into the first bypass channel 34. In this case, when the controller 11a, 11c to 11e judges that the required amount of cooling of the pressurized air is small, the controller 11a, 11c to 11e can cause all of the working fluid flowing through the pipe 29 to flow into the coolant boiler 21 (maximize the flow rate of the working fluid flowing into the coolant boiler 21). On the other hand, when the controller 11a, 11c to 11e judges that the required amount of cooling of the pressurized air is large, the controller 11a, 11c to 11e can cause part of the working fluid flowing through the pipe 29 to flow into the first bypass channel 34 (decrease the flow rate of the working fluid flowing into the coolant boiler 21).

The controller 11b in the waste heat utilization apparatus of the second embodiment may control the second flow regulating valve 43 to allow part of the working fluid flowing through the pipe 46 to flow into the second bypass channel 41 even when the controller 11b judges that the required amount of cooling of the pressurized air is small. Similarly, when the controller 11a, 11c to 11e in the configuration of the waste heat utilization apparatus of any of the first and third to fifth embodiments where a regulating valve similar to the second flow regulating valve 43 is used as described above judges that the required amount of cooling of pressurize air is small, the controller 11a, 11c to 11e may cause part of the working fluid flowing through the pipe 29 to flow into the first bypass channel 34.

The second flow regulating valve 43 in the waste heat utilization apparatus of the second embodiment may be replaced with a three-way valve 35.

The three-way valve 35, the first and second flow regulating valves 36 and 43 may be replaced with on-off valves that can open and close the first bypass channel 34 and the second bypass channel 41. This variation, like the embodiments described above, enables simplification of the configuration of the waste heat utilization apparatus.

Furthermore, when the controller 11a to 11e in the waste heat utilization apparatus of any of the first to fifth embodiments judges that the required amount of cooling of the pressurized air exceeds the threshold value, the controller 11a to 11e may be configured to adjust the flow rate of the coolant flowing into the coolant boiler 21 as heating medium or the flow rate of the exhaust gas flowing into the exhaust gas boiler 26 as heating medium, thereby decreasing the amount of heat absorbed in the working fluid in the coolant boiler 21 or the exhaust gas boiler 26.

Additionally, a well-known receiver may be provided in the pipe 33 in the waste heat utilization apparatus of any of the first to fifth embodiments. In this case, because the working fluid is adequately liquefied by the receiver, the working fluid that passed through the condenser 27 is adequately pumped from the second electric pump P2.

### INDUSTRIAL APPLICABILITY

The present invention can be used in vehicles and the like.

### EXPLANATION OF THE REFERENCE NUMBERS

1 ... Driving system
3a - 3c ... Rankine cycle system
5 ... Engine (internal combustion engine)
7 ... Turbocharger (supercharger)
11a, 11c, 11d, 11e ... Controller (judgment means, heat absorption amount adjusting means, first regulating valve control means)
11b ... Controller (judgment means, heat absorption amount adjusting means, second regulating valve control means)
21 ... Coolant boiler (second boiler)
23 ... Pressurized air boiler (first boiler)
25 ... Expansion machine
26 ... Exhaust gas boiler (second boiler)
27 ... Condenser
28 - 33 ... Pipe
34 ... First bypass channel (heat absorption amount adjusting means)
35 ... Three-way valve (first flow regulating valve, heat absorption amount adjusting means)
41 ... Second bypass channel (heat absorption amount adjusting means)
43 ... Second flow regulating valve (heat absorption amount adjusting means)
45 - 48 ... Pipe
P2 ... Second electric pump (pump)

## Claims

1. A waste heat utilization apparatus that is used for a driving system including an internal-combustion engine and a supercharger supplying pressurized air to the internal-combustion engine,
the waste heat utilization apparatus comprising a Rankine cycle system which circulates working fluid,
wherein the Rankine cycle system comprises a pump, a boiler, an expansion machine, a condenser, and pipes circulating the working fluid through the pump, the boiler, the expansion machine and the condenser in this order;
the boiler includes a first boiler causing heat exchange between the pressurized air as heating medium and the working fluid and a second boiler causing heat exchange between other heating medium different from the pressurized air and the working fluid; and
the waste heat utilization apparatus comprises:
judgment means for judging a required amount of cooling of the pressurized air; and
heat absorption amount adjusting means for decreasing an amount of heat absorbed in the working fluid in the second boiler when the required amount of cooling judged by the judgment means is greater than threshold value.

2. The waste heat utilization apparatus according to claim 1, comprising output power requirement detecting means capable of detecting output power requirement of the internal-combustion engine,
wherein the judgment means judges the required amount of cooling of the pressurized air on the basis of value detected by the output power requirement detecting means.

3. The waste heat utilization apparatus according to claim 1, comprising first temperature detecting means capable of detecting temperature of the pressurized air flowing out from the first boiler,
wherein the judgment means judges the required amount of cooling of the pressurized air on the basis of value detected by the first temperature detecting means.

4. The waste heat utilization apparatus according to claim 1, comprising second temperature detecting means capable of detecting temperature of the working fluid flowing into the first boiler,
wherein the judgment means judges the required amount of cooling of the pressurized air on the basis of value detected by the second temperature detecting means.

5. The waste heat utilization apparatus according to claim 1, comprising third temperature detecting means capable of detecting temperature of the working fluid flowing into the pump,
wherein the judgment means judges the required amount of cooling of the pressurized air on the basis of value detected by the third temperature detecting means.

6. The waste heat utilization apparatus according to claim 1, comprising fourth temperature detecting means capable of detecting temperature of the pressurized air flowing into the first boiler,
wherein the judgment means judges the required amount of cooling of the pressurized air on the basis of value detected by the fourth temperature detecting means.

7. The waste heat utilization apparatus according to claim 1, comprising pressure detecting means capable of detecting pressure of the working fluid from downstream of the expansion machine to upstream of the pump,
wherein the judgment means judges the required amount of cooling of the pressurized air on the basis of value detected by the pressure detecting means.

8. The waste heat utilization apparatus according to any one of claims 1 to 7,
wherein the second boiler is disposed upstream of the first boiler in the Rankine cycle system; and
the pipes allow the working fluid to circulate through the pump, the second boiler, the first boiler, the expansion machine and the condenser in this order.

9. The waste heat utilization apparatus according to claim 8,
wherein the heat absorption amount adjusting means comprises a first bypass channel branching off from one of the pipes downstream of the pump, bypassing the second boiler, and coupling to one of the pipes upstream of the first boiler;
a first flow regulating valve capable of adjusting flow rate of the working fluid flowing into the second boiler and flow rate of the working fluid flowing into the first bypass channel; and
first regulating valve control means for controlling the first flow regulating valve.

10. The waste heat utilization apparatus according to any one of claims 1 to 7,
wherein the first boiler is disposed upstream of the second boiler in the Rankine cycle system; and
the pipes circulate the working fluid through the pump, the first boiler, the second boiler, the expansion machine and the condenser in this order.

11. The waste heat utilization apparatus according to claim 10,
wherein the heat absorption amount adjusting means comprises a second bypass channel branching off from one of the pipes downstream of the first boiler, bypassing the second boiler, and coupling to one of the pipes upstream of the expansion machine;
a second flow regulating valve capable of adjusting the flow rate of the working fluid flowing into the second boiler and the flow rate of the working fluid flowing into the second bypass channel; and
second regulating valve control means for controlling the second flow regulating valve.
